Europäisches Patentamt

European Patent Office

Office européen des brevets

(11) Veröffentlichungsnummer: **0 290 795**

**A2**

(12) # EUROPÄISCHE PATENTANMELDUNG

(21) Anmeldenummer: **88105753.3**

(22) Anmeldetag: **12.04.88**

(51) Int. Cl.⁴: **B29C 47/20**

Die Bezeichnung der Erfindung wurde geändert (Richtlinien für die Prüfung im EPA, A-III, 7.3).

(30) Priorität: **15.04.87 YU 687/87**

(43) Veröffentlichungstag der Anmeldung:
**17.11.88 Patentblatt 88/46**

(84) Benannte Vertragsstaaten:
**AT DE FR GB IT**

(71) Anmelder: **Kraljevic, Stanko**
**Radiceva 32**
**YU-4700 Karlovac(YU)**

(72) Erfinder: **Kraljevic, Stanko**
**Radiceva 32**
**YU-4700 Karlovac(YU)**

(74) Vertreter: **Winter, Konrad Theodor, Dipl.-Ing.**
**et al**
**Patentanwaltsbüro Tiedtke- Bühling- Kinne-**
**Grupe- Pellmann- Grams- Struif- Winter-**
**Roth Bavariaring 4**
**D-8000 München 2(DE)**

(54) **Vorrichtung zur Erzeugung eines Vakuums während des Extrudierens eines dünnwandigen Gummischlauches.**

(57) Im Extrusionskopf (2) ist auf einen Gewindeteil (28) an der Frontfläche einer Rundplatte (27) ein konischer Hohlkörper (22) befestigt, dessen Stirnwand eine Zentralbohrung (23) und mehrere kreisförmig verteilte Bohrungen (24) aufweist. Eine in der Mitte der Rundplatte angebrachte Rohrdüse (29) ist über eine Bohrung (33) und ein flexibles Rohr (5) mit einem Mischbehälter (3) verbunden, während eine Ringöffnung (30) im Gewindeteil (28) über eine Bohrung (35) und ein flexibles Rohr (6) mit einer Absaugvorrichtung (4) verbunden ist.

Bei Extrudieren eines dünnwandigen Gummischlauches wird ein Talk/Luftgemisch durch die Rohrdüse (29) eingeblasen und durch die Bohrungen (24) abgesaugt. Talk verhindert das Zusammenkleben der Innenwände des evakuierten dünnwandigen Schlauches, der durch Wasserstrahl (12.1) abgekühlt wird. Die Schlauch-Außenwand wird in einem Emulsionsbad (13) bearbeitet.

## Vorrichtung zum wackumieren vom extrudiertem dünwändigez Gummischläuchen

Die Erfindung bezieht sich auf ain Vorrichtung zum wackumieren vom extrudiertem dünnwändigen Gummieschlauehs, wobei ist der Körper des Vorrichtungs in der Calibraziokskopf des Extruders untergebracht und befestigt worden, wogegen der Dinn (regel) des Calibrazionsköptes mit enem Gewinde an dem zentralem zülindrischem Teil des Vorrichtungs angebracht ist.

Durch den Vorrichtung wird gleichzeitiges extrudieren und vackumieren ermöglicht, für alle dünnhäntige Gummieschlänche, ohne das die heissen Ihnenwande zusammenkleben.

Sofort oder unmittelbar donnach erfolgt durchziehen durch Kühlduschen und Emulsionsbad. Ohne durchtrennen wird der Schlauch aufgerollt.

Bei der Herstellung von Dünnwändigen Gummischläche, wie z.B. Feuerwehrschläuche, Schläuche für Fahrräder oder Motorräder Zu vermeiden, und änliches, werden herkomliche weise oder bisher bekannte welse, um zusammenkleben der Ihnenwände nach verlassen, des Extruders und auf dem Transporter der seinerseit sinchron mit der Ausgangsgeschwind tigkeit aus dem Calibrazionskopfes des Extruders lauff, durch eine Düse unter einem bestimmten Druck, mit einen Mischung vom luft und Talk in Spannung gehalten.

Hauptnachteil des oben beschriekenen und Bekannten herstellung ist die Tatsoche das die Max.Länge so hergestellten Gummischauchs durch die länge des Transporters bestimmt ist, die wiederum durch die länge der Produktionshalle abhängig ist.

Werend dessen wird eine ziemlich grosse Menge am Talk - luftgemisch durch die Offeung des Schlanches rausgeblasen was wiederum erschwerte arbeitsbedinungen-starke und Srez.lüftungssysteme erfordert. Nicht zu vergessen sind auch umweltbelastungen.

Das Ziel meines Erfindungs ist: So eben extrudiertes Schlauch sofort noch verlassen des Calibrazionsköpfes vacumieree und dieses ohne es zu - schneiden, also als ganzes Stuck im unmittelbare Nähe auf einem Rad aufrollen. Dadurch wird der Transporter auf ein vielfaches verkürtzt, und ausströmen des kalk-luft Gemisches rollig eliminiert und geläst.

Erfindung ist detailirter erläutert auf beigefügtem Zeinchnungen:

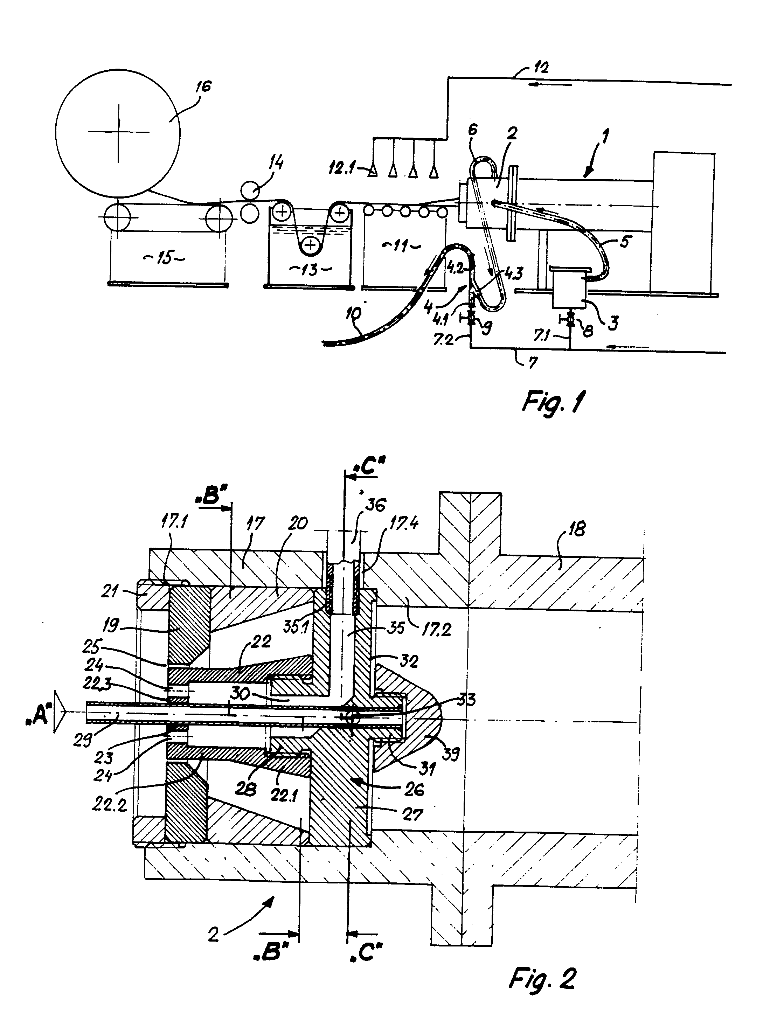

Fig. 1: Shema-Anlage für die Herstellung dünnwändigen Gummischlauchs dur extrudieren

Fig. 2: Schnitt nach länge und senkrecht vom calibrazionskopfes mit dem Vorrichtung für vacumieren

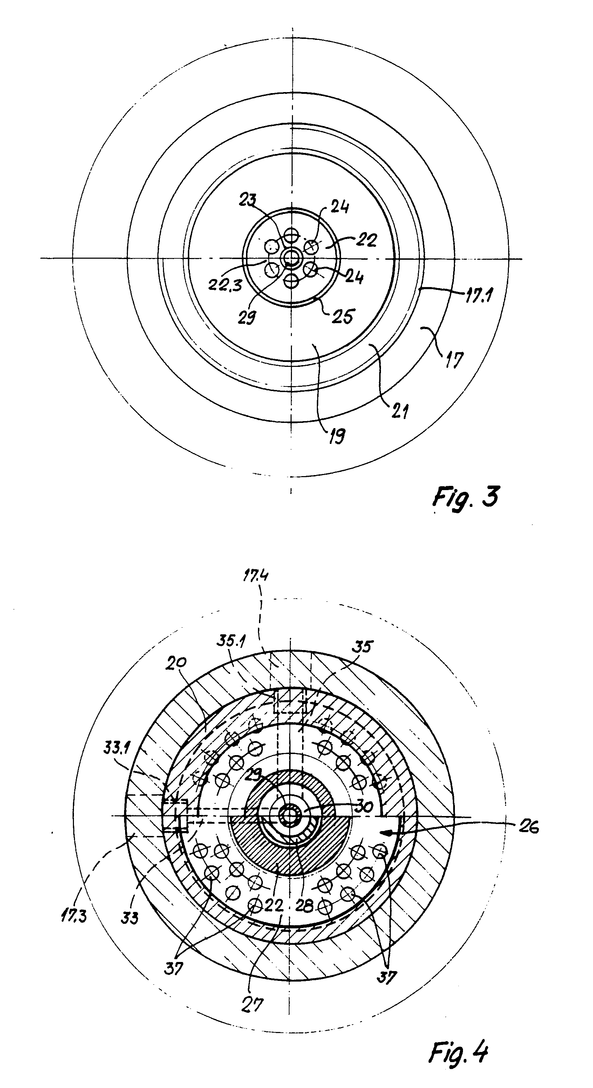

Fig. 3: Sicht "A" vom Bild 2 Frontseite vom Extruder-Kopf.

Fig. 4: Querschnitt "B-B" Bild 2-Calibrazions Kopf.

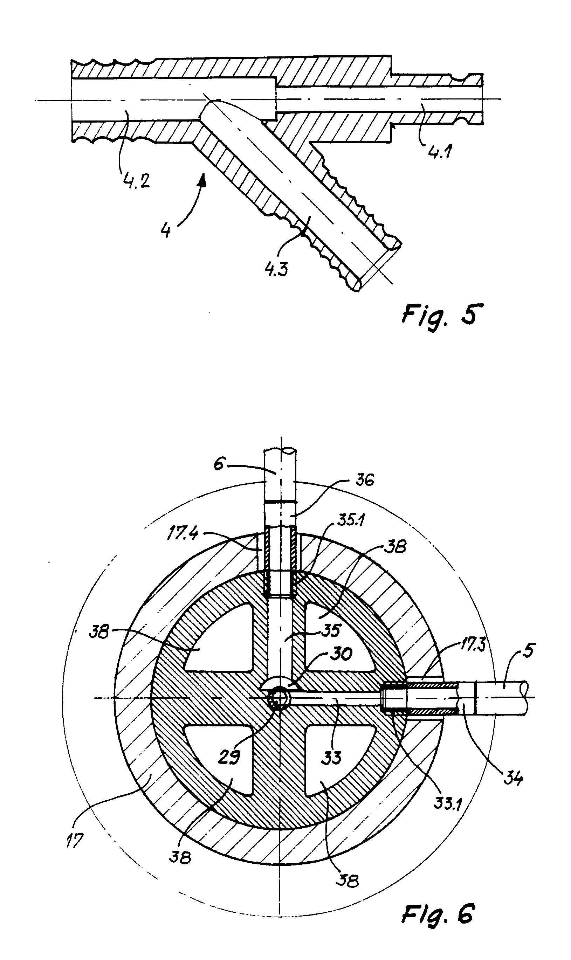

Fig. 5: Längstschnitt vom Ejektor

Fig. 6: Querschnitt "C-C" Bild 2 durch die Mitle der Kreissplatte in der zweiten Wersion.

Gemäs der Shema der Anlage-Bild 1, Extruder 1 ist mit Calibrationskopf 2 unmittelbar vor dem Rollen transporter 11. Oben, darüber ist Rohrenleitung 12 für kühlwasserzufur, an dem längst.

Untere Seite in regelmäsigen Abständen die Auslasvorrichtungen 12.1 (Dusch-Rosseten) angebracht sind. Vor dem Transportsystem 11 befindet sich Emulsionsbad 13 dahinter folgt ein zwei Walzen Emulziontrockner 14 und ein Band-Transporter 15 und oberhalb ein Aufrollvorrichtung 16 für Vacumirte dünwändige Schlänche.

Auf Extruder Calibrationskopf 2 ist für zufor vom Talk-Luft Mischung ein Flexirohr 5 angebracht. An der anderen Seite ist die mit dem Behälter 3 wo mischprozes stattfindet fest angeschlossen. Vom Calibrationskopf 2 führt eine Flexirohr 6 angeschlossen an Ansaugstück 4,3 am Ejektor 4. Luftzufurrohr 7 ist mit dem Behälter vom Kompressor (auf dem Zeichnung nicht gezeichnet) mit einem Abzweig 7.1 über Regulationsventil 8 und Behälter 3 verbunden. Der Zweite Abzweig 7.2 ist über einen zweiten Regulations ventil 9 an zufuhr Anschluss 4.1 am Ejektor 4 angeschlossen. Am Austritöffnung 4.2 am Ejektor 4 ist Rohrleitung 10 zum Abtransport-Absauf vom Talk-luftgemisch (am Zeichnung nicht extra gezeichnet) angeschlossen.

Zylindergehäuse 17 vom Calibrazionskopf 2 ist mit z.B. Flanche an das Gehäuse 18 des Schneckentransporters für Flüssiggummimasse des Extruders angebracht. Auf der Vorderseite des Zylindrischen Gehäuse 17 ist Gewinde 17.1 und am Rückseite 17.2 ist Einlass mit otwas kleinerem durchmessen. Am Kranzteil des Ruckseite 17.2 Befindet sich eine Runde Platte 27 ein Element 26 zum Vacumieren. Zwieschen Calibrations Platte 19 und Randteiles. Front Flöche der Kreiss Platte 27 ist ein Distanz-Ring 20 mit konisch ausgefürtem Offnung, wobei ist Calibrazionsplatte 19 auf der Frontseite mit Gewinde 17.1 an das Zylindergehäuse 17 festgemacht.

Am Gewindererlängeruno 28 der Frokt-grundfläche vom kreissplatte 27 ist der Pinn (Kegel) 22 mit der Grundfläche, hinten konisch ausgefürt festgemacht und feste angelent auf die Frontseite der kreisplatte 27 Auf der Basis seite 22.3 Frontal-Zulindriscken Teiles 22.2 des kegels ist Zentral durchbohrung 23 und einige, zB 6stuch, Kreisförmig verteilte Bohrungen 24. Die Front.fläche der Grundfläche 22.3 des Pinns 22 ist in der linie mit der Front-fläche des Calibrations Platte 19 verbunden wobei mit dem Abstand 25 zwischen vorderen Zylindrischen Teils 22.2 des Pinns 22 und Zentralen Kreisformigen Öffnung Calibrationsplatte 19 die Wordstärke des Gummischlanches bestimmt wird.

Düse 29 liegt axial in dem Bohrung 30, mit dem grösserem Durchmesser Gewindeteices 28, und mit der Rückseig festangelekt an Rundplatte 27 und in dem durchbohrung des Gewindetules 31 der Rückfläche 32 und der Rundplatte 27. Die Rohrdüse 29 ligt auch mit seine. Frontscite ganz knappe an das Zentralbohrung 23 der front fläche 22.3 des körners 22 angelent. Senkrecht auf die Rohrdüse 29 in der Mitte der Rundplatte 27 ist eine Bohruno 33 in Radialem Richtung an das Gewinde 33.1 wo sich auch ein Gewindeauschluss 34 für das Flexirohr 5 für den zufuhr vom Talk-luftgemisch befindet.

Radial in Winkel vom 90° durch die Mitte der Kreissplatte 27 und im Gewindeteil 28 ist eine Bohrung 35 etwos gröseren Durchmessen mit Gewinde, wo sich der Gewindeauschluss für Flexirohr 6 befindet.

Die Gewindeanschlüsse 34,36 werden durch dafür vorgesehenc Bohrungen 17.3, 17.4 die Axial verlaufen in dem Richtung-Bohnug 33,35, an Zylinde Gehäuse 17 vom Calibrations Köpfes 2 des Extruders 1 angebracht. Durch die Rundplatte 27 sind mehrere Bohrungen 37 zweifach im Kreiss und Diametral verteilt. Zweite Ausführung Rundplatte 27 Bild 6 statt Bohrungen 37 Auschnitte 38 Diametral gegenüberseitig.

Nutflanke 32 ist für das sieb vorgeschen, desen äuserer Rand durch den sitz am Rand 17.2 und Zentraler Teil olurch die Basisfläche Gewindedeckel 39 angerogen, an Gewindeteil 31 befestigt wird.

Durch die oben genaunte lösung wird ermoglicht das die flüsige Gummimasse ohne Wiederstand durch die Bohrung 37 fliest. Oder, in der zweiten Wersion der Rundplatte, 27 und zwieschenstüchs 26 und durch die Öfnunge 38 in das Freiramm des Distanzringes 20 und ausenfläche des Pinns 22 und durch zwieschekranm 25 are Calibrationskopf 2 ein vollständig formirtes Gummieschlanch entstcht.

Gleichzeitig wird durch Rohrdüse 29 Talk-luftgemisch zugefürt und Vacumierung durchgefürt. Dabei verhindert Talk, das noch heisse ihnenflächen nicht zusammenkleben, obwohl noch sehr heiss. Noch verbliebener Talk-luftgemisch wird durch die Bohrungen 24 der Gundfläche 22.3 des Pinns 22, abgesangt.

**Ansprüche**

1. Die Erfindung bezieht sich auf Vorrichtung für Vacumiren vom Extrudiertem Gummischlauch, seine Bestandteille sind: Transportsystem (11) vor dem Calibrationskopf (2) des Extruders (1) oberhalb dem sich die notwendigen Dusch vorrichtungen (12.1) zum kühlen befinden, angebracht auf unterserte des Wosserrohres (12) und im weiterem verlauf ein Emulsionbad (13) danach ein zweiwalzen abtrockner (14) ein Bandtransporter (15) und Tromme (16) zum aufrollen von vacumirtem, dünnwändgen Schlauch Calibrations-kopfes (2), dadurch gekennzeichnet, das in dem Cylindrischem Gehäuse (17) des Calibrationskopf (2) zwieschen; Stirnefläche der Bückseite (17.2) und Distansninges (20) eine Runddatte (27) befestigt ist, der Rundplatte (27) ein Element (26) zum Vocumiren, das an don Gewindeteill (28) der Raundplatte (27) ein Pine (22) der auf der vorderseite (22.3) einen zentralen Bohrung (23) und mehrere im kreis verteillte Bohrungen (24) hat.

2. Der Vorrichtung nach dem Antrag 1 ist dadurch gekennzeichnkt das die Rohrendüse (29), axial im Rundem Ofnung (30) den gröberem Gewindeteil (28) mit der Ruckseit fest eingeklemmt in Rundplatte (27) und im Bohnung Gewindeteils (31) in der Mitte der Ruckseite (32), auf der Vrontgeite knapp angepast in der Bohrung (23) Frontseite (22.3) Pinn (22), das sekkrecht auf die Rohrendüse (29) die radial in der Mitte des Körpers der Rundplatte (27) bis Rohrendüse (29) Bohrung (33) wobei der zweite Bohrung (35) bis zum runden Öffnung (30) Gewindeteil (28), und Gewindeteil (31) angezogener Gewindedeckel (39) konische Form und wil durch, den Körper der Rundplatte (27) guer durch mehrere Bohrungen (37) in vier diametral gegenseitig angelegte Gruppen sind.

3. Der Vorrichtung nach dem Antrag 2 und in der zweiten aufirung dodurch gekennzeichnet das in der Rundplatte (27) vier diame tral gegenseitig Öfnungen (38).

4. Der Vorrichtung nach dem Antrag 1 u. 2 gekenzechnet dadurch das im Gewindeteill (33.1) Bohrung (33) befestigt Gewinde-Anschlas (34) Fleksinohre (5) an der anderen Seite mit dem Behölter (3) verbunden zum Talk-luftgemisch aufbereitung das in Gewindeteil (35.1) Bohruns (35) befestigter Gewindeonschluss (36) Flexirohr (6) an der anderen Seite an das Ansang-abzweig (4.3) des Ejektors (4) wobei die Gewinde Auschlüsse (34,36) in den Bohrungen (17.3, 17.4) angebracht sind an Zylindergehäuse (17).

0 290 795

Fig. 1

Fig. 2

Fig. 3

Fig. 4

Fig. 5

Fig. 6